# EUROPEAN PATENT APPLICATION

(11) **EP 4 327 649 A1**
(43) Date of publication of application: **28.02.2024**
(21) Application number: 22791984.2
(22) Date of filing: 18.04.2022
(51) Int. Cl.: A01G 7/04, A01G 7/06, F21V 9/45, F21Y 113/00, F21Y 105/10

(54) **LIGHT SOURCE MODULE FOR PLANT CULTIVATION, AND PLANT CULTIVATION METHOD**

(30) Priority: 19.04.2021 KR 20210050459
(71) Applicant: Seoul Viosys Co., Ltd., Ansan-si, Gyeonggi-do 15429 (KR); Industry-University Cooperation Foundation of Chungbuk National University, Cheongju-si, Chungcheongbuk-do 28644 (KR)
(72) Inventor: OH, Myung Min, Seoul 06715 (KR); PARK, Song Yi, Sejong 30150 (KR); LEE, Ji Won, Ansan-si Gyeonggi-do 15343 (KR)
(74) Representative: Isarpatent
(86) International application number: PCT/KR2022/005557
(87) International publication number: WO 2022/225284

(57) **Abstract**

A light source module for plant cultivation and a plant cultivation method. The light source module for plant cultivation includes: a substrate; a main light source; and a supplemental light source. The main light source is electrically connected to the substrate and supplies background light to a plant. The supplemental light source is electrically connected to the substrate and supplies supplemental light to the plant. Here, the background light and the supplemental light have different peak wavelengths. In addition, the supplemental light includes blue light to enhance growth of the plant and the content of a specific phytochemical in the plant.

## Description

### [Technical Field]

The present invention relates to a light source module for plant cultivation and a plant cultivation method, which can increase the content of a specific phytochemical in a plant while enhancing growth of the plant.

### [Background Art]

Plants produce organic matter from carbon dioxide and water using light energy through photosynthesis. Plants use chemical energy of organic matter obtained through photosynthesis as nutrients for growth.

Plants contain phytochemicals that have beneficial effects on targeted subjects. The amount of phytochemicals in plants depends on the growth environment. For example, plants protect themselves by producing antioxidants to defend against stress-induced damage.

In recent years, in order to increase the phytochemical content of plants, treating the plants with UV light to apply stress to the plants has been used.

However, irradiating plants with high-intensity UV light can cause death of the plants or cosmetic damage to the plants that makes it difficult to consume the plants or extract phytochemicals from the plants, such as leaf drying and browning.

### [Disclosure]

### [Technical Problem]

It is an object of the present invention to provide a light source module for plant cultivation and a plant cultivation method which can enhance growth of a plant without damage to the plant while increasing the content of a specific phytochemical in the plant.

### [Technical Solution]

In accordance with one aspect of the present invention, a light source module for plant cultivation includes: a substrate; a main light source; and a supplemental light source. The main light source is electrically connected to the substrate and supplies background light to a plant. The supplemental light source is electrically connected to the substrate and supplies supplemental light to the plant.

Here, the background light and the supplemental light have different peak wavelengths.

In addition, the supplemental light includes blue light to enhance growth of the plant and the content of a specific phytochemical in the plant.

The main light source may supply the plant with white light as the background light.

The supplemental light may have a peak wavelength in the range of 380 nm to 500 nm.

For example, the supplemental light may have at least one peak wavelength selected from among 385 nm and 395 nm.

The main light source may be turned on or off every 12 hours to allow or interrupt supply of the background light.

The supplemental light source may continuously supply the supplemental light to the plant before harvesting of the plant.

For example, the supplemental light source may continuously supply the supplemental light to the plant for 5 to 7 days before harvesting of the plant.

The supplemental light may have an irradiance of 30 W/m².

The plant is ice plant.

The specific phytochemical of the plant may include at least one of pinitol, myo-inositol, and sucrose.

In accordance with another aspect of the present invention, a plant cultivation method for enhancing growth of a plant and the content of a specific phytochemical in the plant includes: supplying the plant with background light at time intervals of 12 hours; and continuously supplying the plant with supplemental light having a different peak wavelength than the background light before harvesting of the plant. Here, the supplemental light includes blue light.

The background light may be white light.

The supplemental light may have a peak wavelength in the range of 380 nm to 500 nm.

For example, the supplemental light may have at least one peak wavelength selected from among 385 nm and 395 nm.

Here, the supplemental light may be continuously supplied to the plant for 5 to 7 days before harvesting of the plant.

The supplemental light may have an irradiance of 30 W/m².

The plant is ice plant.

The specific phytochemical of the plant may include at least one of pinitol, myo-inositol, and sucrose.

### [Advantageous Effects]

The light source module for plant cultivation and the plant cultivation method according to embodiments of the present invention can enhance growth of a plant without damage to the plant by supplying the plant with supplemental light in addition to background light.

The light source module for plant cultivation and the plant cultivation method according to embodiments of the present invention can increase the content of a specific phytochemical in a plant while improving growth of the plant.

In particular, the light source module for plant cultivation and the plant cultivation method according to embodiments of the present invention can increase the content of sugar alcohols in ice plant, which are effective in controlling blood sugar levels.

### [Description of Drawings]

FIG. 1 is a schematic view of a light source module for plant cultivation according to the present invention.
FIG. 2 is a spectrum of light supplied to a control group according to the present invention.
FIG. 3 is a spectrum of light supplied to Experimental group 1 according to the present invention.
FIG. 4 is a spectrum of light supplied to Experimental group 2 according to the present invention.
FIG. 5 is a spectrum of light supplied to Experimental group 3 according to the present invention.
FIG. 6 is a spectrum of light supplied to Experimental group 4 according to the present invention.
FIG. 7 is a spectrum of light supplied to Experimental group 5 according to the present invention.
FIG. 8 is an image showing changes in status of a plant depending on light treatment conditions according to the present invention.
FIG. 9 is a graph showing changes in fresh weight of the aerial part of the plant depending on the light treatment conditions according to the present invention.
FIG. 10 is a graph showing changes in dry weight of the aerial part of the plant depending on the light treatment conditions according to the present invention.
FIG. 11 is a graph showing changes in leaf area of the plant depending on the light treatment conditions according to the present invention.
FIG. 12 is a graph showing changes in SPAD value of the plant depending on the light treatment conditions according to the present invention.
FIG. 13 shows the photosynthetic rate of the plant measured during the daytime on the third day of supplemental light treatment.
FIG. 14 shows the photosynthetic rate of the plant measured during the nighttime on the third day of supplemental light treatment.
FIG. 15 is a graph showing changes in maximum quantum efficiency of photosystem II (Fv/Fm) depending on the light treatment conditions according to the present invention.
FIG. 16 is a graph showing changes in total phenolic content of the plant depending on the light treatment conditions according to the present invention.
FIG. 17 is a graph showing changes in antioxidant level of the plant depending on the light treatment conditions according to the present invention.
FIG. 18 is a graph showing changes in PAL activity of the plant depending on the light treatment conditions according to the present invention.
FIG. 19 is a graph showing changes in pinitol content per gram depending on the light treatment conditions according to the present invention.
FIG. 20 is a graph showing changes in pinitol content per plant (aerial part) depending on the light treatment conditions according to the present invention.
FIG. 21 is a graph showing changes in myo-inositol content per gram depending on the light treatment conditions.
FIG. 22 is a graph showing changes in myo-inositol content per plant (aerial part) depending on the light treatment conditions.
FIG. 23 is a graph showing changes in sucrose content per gram depending on the light treatment conditions.
FIG. 24 is a graph showing changes in sucrose content per plant (aerial part) depending on the light treatment conditions.

### [Mode for Invention]

Hereinafter, exemplary embodiments of the present invention will be described with reference to the accompanying drawings. It should be understood that the embodiments are provided for complete disclosure and thorough understanding of the present invention by those skilled in the art. Therefore, the present invention is not limited to the following embodiments and may be embodied in different ways. In addition, the drawings may be exaggerated in width, length, and thickness of components for descriptive convenience and clarity only. Like components will be denoted by like reference numerals throughout the specification.

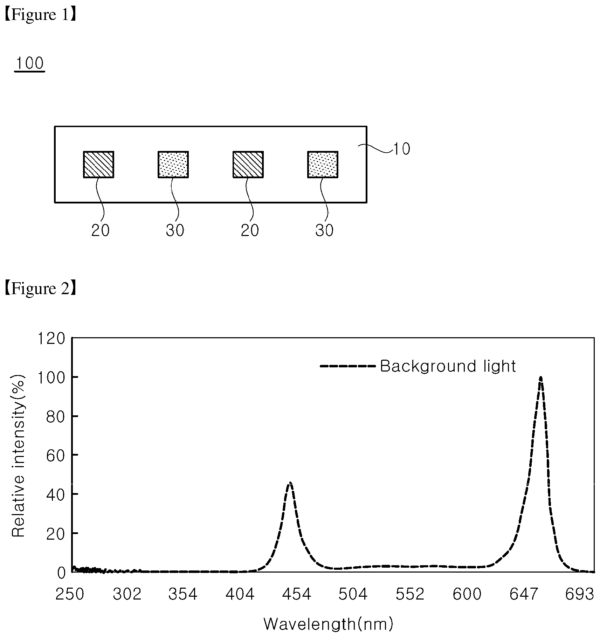

FIG. 1 is a schematic view of a light source module for plant cultivation according to the present invention.

A light source module 100 according to the present invention is used in a place that provides control of plant growth conditions, such as a plant factory.

The plant factory provides an environment that allows plants to be grown in all seasons through control of plant growth conditions.

The light source module 100 according to the present invention may control conditions for photosynthesis and stress conditions, among the plant growth conditions.

Referring to FIG. 1, the light source module 100 according to the present invention includes: a substrate 10; a main light source 20; and a supplemental light source 30. The substrate 10 may be electrically connected to the main light source 20 and the supplemental light source 30.

The substrate 10 may control operation of the main light source 20 and the supplemental light source 30 in response to a predetermined signal.

For example, the substrate 10 may be a printed circuit board. Each of the main light source 20 and the supplemental light source 30 may include a light emitting diode and may be mounted on the substrate 10.

The main light source 20 supplies background light for photosynthesis to plants in a plant cultivation space, such as an interior of a plant factory.

According to the present invention, the main light source 20 corresponds to an artificial light source typically used in a plant factory. The artificial light source generally supplies the plants with white light having a light intensity of about 200 µmol/m²/s to about 300 µmol/m²/s as the background light.

Natural light, such as sunlight, has a light intensity of about 1,000 µmol/m²/s or more during the daytime.

That is, the artificial light source supplies the plants with background light having a lower light intensity than natural light. In addition, the light intensity of the background light supplied by the artificial light source is not enough for the plants to reach a light saturation point thereof.

The light source module 100 for plant cultivation according to the present invention further includes the supplemental light source 30 in addition to the main light source 20.

Thus, the light source module 100 for plant cultivation according to the present invention may further supply the plants with supplemental light for improving photosynthetic efficiency of the plants in addition to the background light.

According to the present invention, the supplemental light source 30 may supply the plants with the supplemental light to supplement light energy requirements not met by the background light emitted from the main light source 20. In addition, the supplemental light source 30 may supply the plants with the supplemental light to increase the content of a specific phytochemical in the plants.

The supplemental light emitted from the supplemental light source 30 may have a different peak wavelength than the background light emitted from the main light source 20.

For example, the supplemental light source 30 may supply the plant with supplemental light including visible light in the blue spectrum and UV light. More specifically, the supplemental light is light having a peak wavelength in the range of about 380 nm to 500 nm.

As such, the light source module 100 for plant cultivation according to the present invention supplies the plants with supplemental light having a longer wavelength than UVB, thereby preventing damage to the plants and poor growth of the plants due to high intensity of UVB.

The light source module 100 for plant cultivation according to the present invention may include multiple main light sources 20 and multiple supplemental light sources 30. When the light source module 100 for plant cultivation according to the present invention includes multiple supplemental light sources 30, each of the multiple supplemental light sources 30 may emit supplemental light having a different peak wavelength.

The light source module 100 for plant cultivation according to the present invention can enhance growth of a plant by supplying the supplemental light to the plant to enhance photosynthesis of the plant.

In addition, the light source module 100 for plant cultivation according to the present invention can increase the content of a specific phytochemical in a plant while improving growth of the plant.

Characteristics of the background light and the supplemental light emitted from the main light source 20 and the supplemental light source 30 of the light source module 100, respectively, will be described in detail with reference to experimental results discussed below.

In the present invention, experiments were conducted to determine changes in plant growth and phytochemical content in response to supplemental light treatment.

The plant used in these experiments is ice plant.

Three-week-old seedlings of ice plant were planted in a plant factory with artificial lighting and were grown for a total of four weeks.

Specifically, the plant samples planted in the plant factory were cultivated in an environment under the following conditions: temperature of about 23°C; relative humidity of 60%; carbon dioxide (CO₂) concentration of 1,000 µmol/mol; and photoperiod of 12-hour light/12-hour dark with background light.

Here, the background light was white light and a light source thereof was a light emitting diode (LED). In addition, the background light had a light intensity of 200 µmol/m²/s.

In addition, a nutrient solution with an EC of 1.5 dS/m and a pH of 6.0 was supplied to the plant samples during the cultivation period.

In these experiments, supplemental light was continuously supplied to the plant samples for one week before harvesting out of a total of four weeks of cultivation.

In these experiments, the plant samples grown under treatment with different types of supplemental light were harvested to compare growth and phytochemical contents therebetween.

A control group was a group of plant samples grown under the background light alone without supplemental light treatment.

Experimental groups 1 to 5 were groups of plant samples grown in environments in which different types of supplemental light were added to the background light.

Here, the wavelength of supplemental light used in these experiments approached the visible spectrum in the sequence of Experimental group 1 to Experimental group 5.

In particular, Experimental groups 4 and 5 were treated with two different types of supplemental light having different peak wavelengths, despite falling within the wavelength range of the supplemental light emitted from the light source module for plant cultivation 100 (see FIG. 1) according to the present invention.

Experimental group 1 was a group of plant samples grown under treatment with a first type of supplemental light having a peak wavelength of 352 nm. Here, a light source of the first type of supplemental light was a UV lamp and the first type of supplemental light had an irradiance of about 15 W/m² to about 16 W/m².

Experiment group 2 was a group of plant samples grown under treatment with a second type of supplemental light having a peak wavelength of 365 nm. Here, a light source of the second type of supplemental light was an LED and the second type of supplemental light had an irradiance of about 30 W/m².

Experimental group 3 was a group of plant samples grown under treatment with a third type of supplemental light having a peak wavelength of 375 nm. Here, a light source of the third type of supplemental light was an LED and the third type of supplemental light had an irradiance of about 30 W/m².

Experimental group 4 was a group of plant samples grown under treatment with a fourth type of supplemental light having a peak wavelength of 385 nm. Here, a light source of the fourth type of supplemental light was an LED, and the fourth type of supplemental light had an irradiance of about 30 W/m².

Experimental group 5 was a group of plant samples grown under treatment with a fifth type of supplemental light having a peak wavelength of 395 nm. Here, a light source of the fifth type of supplemental light was an LED and the fifth type of supplemental light had an irradiance of about 30 W/m².

FIG. 2 to FIG. 7 show spectra of light supplied to the plant samples in the experiments according to the present invention.

FIG. 2 is a spectrum of light supplied to the control group according to the present invention. That is, FIG. 2 is a spectrum of the background light.

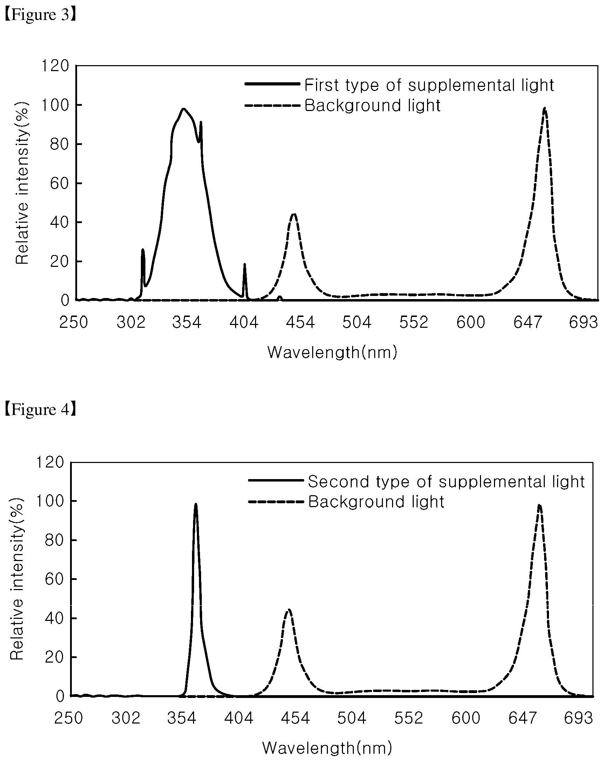

FIG. 3 is a spectrum of light supplied to Experimental group 1 according to the present invention. That is, FIG. 3 is a combined spectrum of the background light and the first type of supplemental light.

FIG. 4 is a spectrum of light supplied to Experimental group 2 according to the present invention. That is, FIG. 3 is a combined spectrum of the background light and the second type of supplemental light.

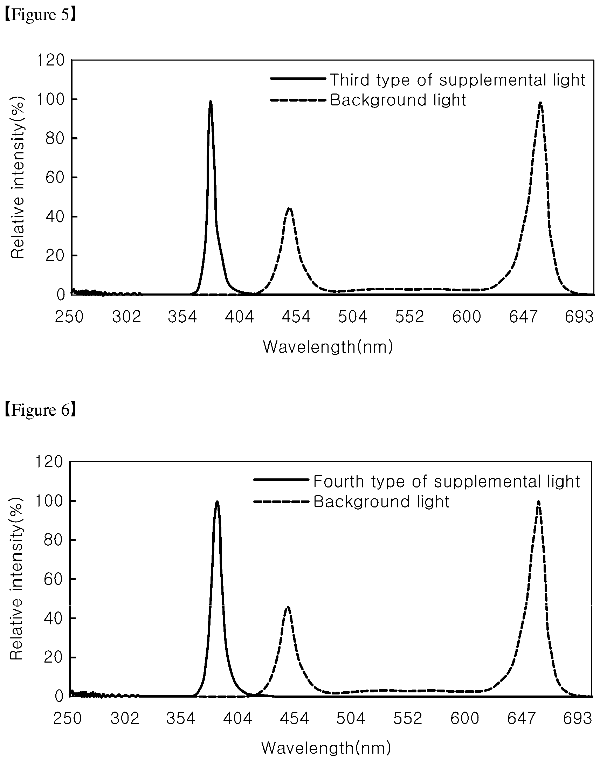

FIG. 5 is a spectrum of light supplied to Experimental group 3 according to the present invention. That is, FIG. 3 is a combined spectrum of the background light and the third type of supplemental light.

FIG. 6 is a spectrum of light supplied to Experimental group 4 according to the present invention. That is, FIG. 3 is a combined spectrum of the background light and the fourth type of supplemental light.

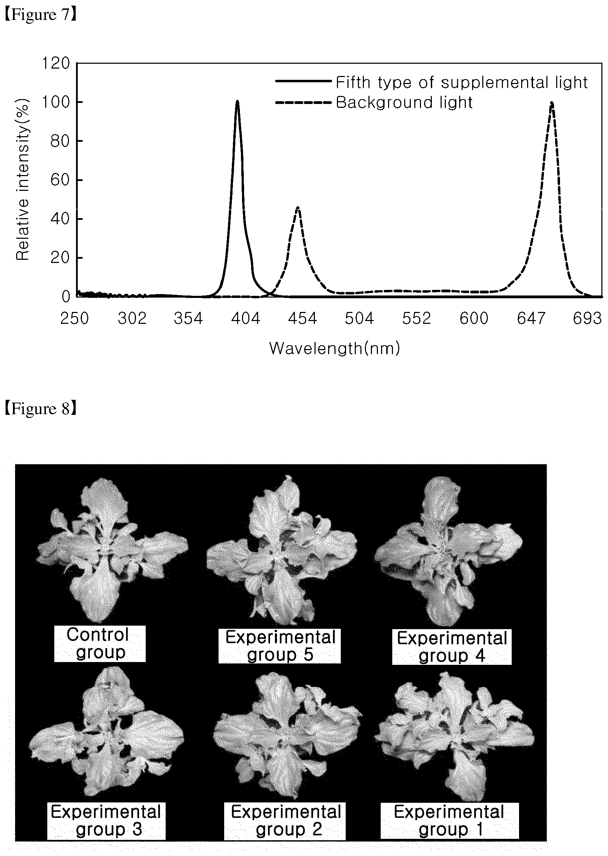

FIG. 7 is a spectrum of light supplied to Experimental group 5 according to the present invention. That is, FIG. 3 is a combined spectrum of the background light and the fifth type of supplemental light.

FIG. 8 to FIG. 12 show results of plant growth depending on the different light treatment conditions according to the present invention.

FIG. 8 is an image showing changes in plant status depending on the different light treatment conditions according to the present invention. That is, FIG. 8 is an image showing the control group and Experimental groups 1 to 5 cultivated for a total of 4 weeks.

Referring to FIG. 8, no visible damage was observed in any of the control group and Experimental groups 1 to 5.

Accordingly, it can be seen that the first to fifth types of supplemental light do not cause any physical damage to the plant even when the plant is continuously exposed thereto for a week.

In addition, plant samples were harvested on days 1, 3, 5, and 7, respectively, after the start of light treatment to determine changes in plant growth.

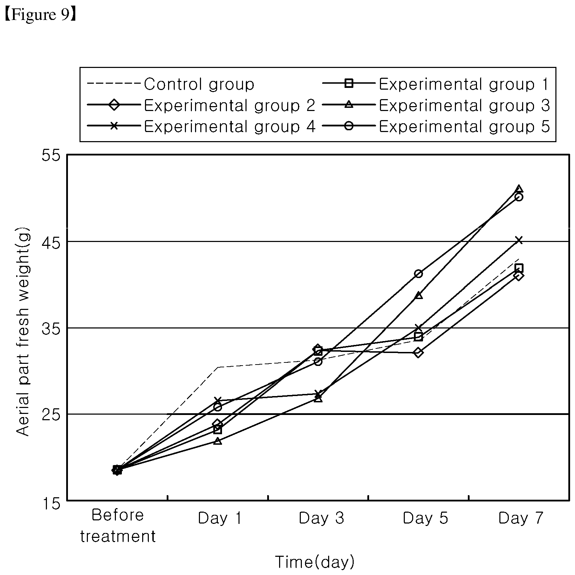

FIG. 9 is a graph showing changes in fresh weight of the aerial part of the plant depending on the light treatment conditions according to the present invention.

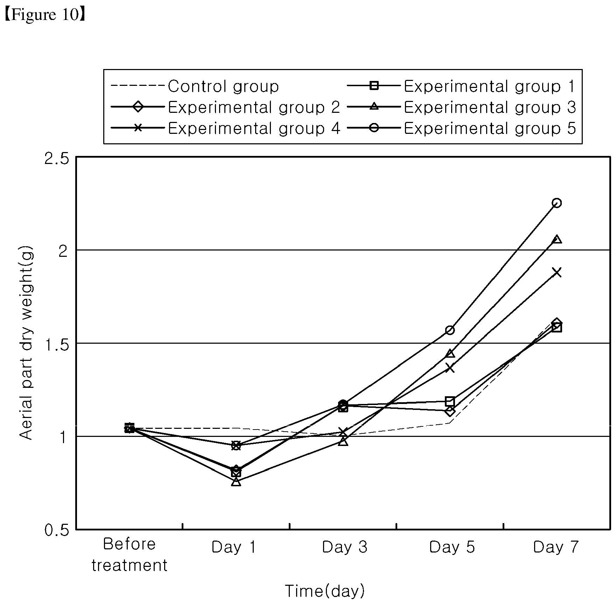

FIG. 10 is a graph showing changes in dry weight of the aerial part of the plant depending on the light treatment conditions according to the present invention.

Fresh weight and dry weight were measured with a precision electronic balance (SI-234, Denver Instruments Inc.). In particular, fresh weight was measured after the aerial part of the plant was freeze-dried for 48 hours or more.

Referring to FIG. 9 and FIG. 10, both fresh weight and dry weight of the plant increased after light treatment.

Referring to FIG. 10, on the fifth day of light treatment, the fresh weight of Experimental group 5 was about 46% greater than that of the control group, and on the seventh day of light treatment, the fresh weights of Experimental groups 3 and 5 significantly increased.

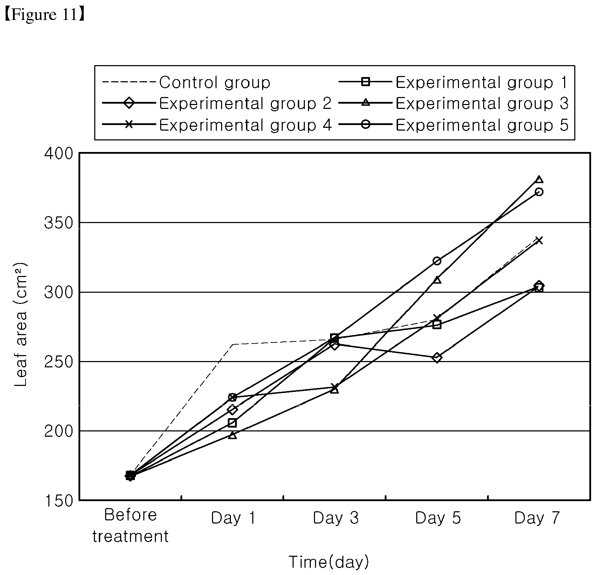

FIG. 11 is a graph showing changes in leaf area of the plant depending on the light treatment conditions according to the present invention.

Referring to FIG. 11, on the seventh day of light treatment, the leaf area of Experimental group 3 was about 20% larger than that of the control group.

In addition, on the seventh day of light treatment, the leaf area of Experimental group 5 was about 10% larger than that of the control group.

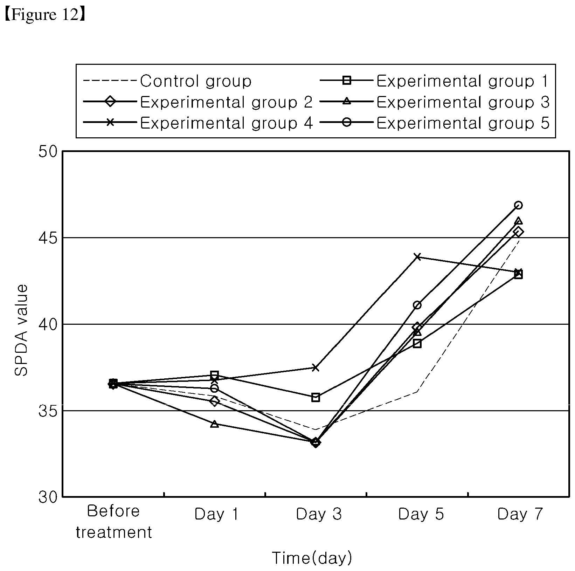

FIG. 12 is a graph showing changes in SPAD value of the plant depending on the light treatment conditions according to the present invention.

The SPAD value representing the chlorophyll content of leaves was not significantly different across the control group and Experimental groups 1 to 5, except on the fifth day of light treatment.

From FIG. 8 to FIG. 12, it can be seen that supplemental light treatment under the conditions according to the present invention does not impair plant growth.

In addition, it can be seen that Experimental groups 1 to 5 treated with supplemental light under the conditions according to the present invention showed similar or better growth than the control group not treated with the supplemental light.

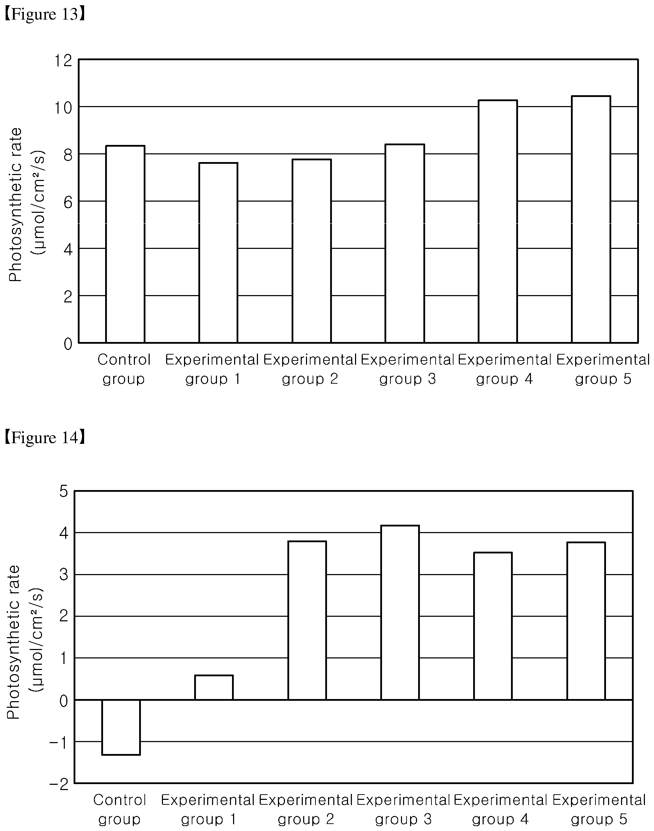

FIG. 13 and FIG. 14 are graphs showing changes in photosynthetic rate of the plant depending on the light treatment conditions according to the present invention.

FIG. 13 shows the photosynthetic rate of the plant measured during the daytime on the third day of supplemental light treatment, and FIG. 14 shows the photosynthetic rate of the plant measured during the nighttime on the third day of supplemental light treatment.

Referring to FIG. 13, the daytime photosynthetic rates of Experimental groups 1 to 3 were not significantly different from that of the control group.

However, the daytime photosynthetic rate of Experimental group 4 was about 24% higher than that of the control group, and the daytime photosynthetic rate of Experimental group 5 was about 26% higher than that of the control group.

Referring to FIG. 14, the nighttime photosynthetic rate was significantly higher in Experimental groups 2 to 5 treated with supplemental light emitted from the LED than in the control group not treated with supplemental light and Experimental group 1 treated with supplemental light emitted from the UV lamp.

In particular, the nighttime photosynthetic rate of the control group not treated with supplemental light had a negative value.

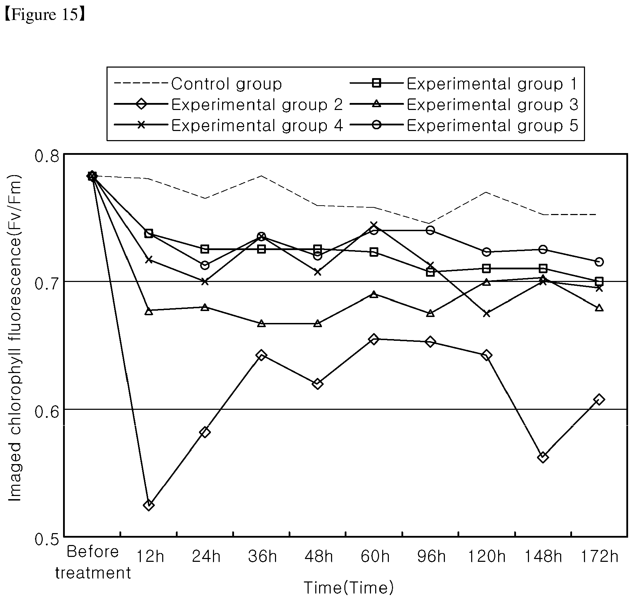

FIG. 15 is a graph showing changes in maximum quantum efficiency of photosystem II (Fv/Fm) depending on the light treatment conditions according to the present invention.

In general, leaves of a healthy plant have an Fv/Fm of about 0.8 to about 0.83. An Fv/Fm value lower than this indicates that a corresponding plant is damaged or in a stressful environment.

Referring to FIG. 15, it can be seen that the Fv/Fm values of Experimental groups 1 to 5 decreased compared to that of the control group after 12 hours of light treatment.

In particular, the Fv/Fm value of Experimental group 2 decreased sharply after 12 hours of light treatment.

However, the Fv/Fm values of Experimental groups 1 to 5 remained similar or slightly increased over time as compared to that after 12 hours of light treatment.

After 168 hours of light treatment, the Fv/Fm values of Experimental groups other than Experimental group 2 were generally similar to each other and were not significantly different from that of the control group.

From this, it can be seen that the plant samples were initially stressed by the supplemental light. In addition, it can be seen that, with increasing time of exposure to the supplemental light, stress of the plant samples caused by the supplemental light decreased compared to that in an early stage of supplemental light treatment.

In addition, it can be seen that plant stress levels of Experimental groups 1 and 3 to 5 treated with the respective types of supplemental light were not significantly different from that of the control group.

FIG. 8 to FIG. 15 show changes in growth of ice plant resulting due to additional treatment with supplemental light having different peak wavelengths.

Referring to FIG. 8 to FIG. 15 showing the fresh weight, dry weight, photosynthetic rate, and Fv/Fm value of the plant samples, it can be seen that Experimental groups 3 to 5 generally exhibited similar or higher growth rates than the control group.

In particular, Experimental groups 3 to 5 treated with the respective types of supplemental light showed enhanced plant growth.

In addition, Experimental groups 4 and 5 treated with the respective types of supplemental light showed enhanced photosynthetic rates.

That is, it can be seen that the third type of supplemental light having a peak wavelength of 375 nm, the fourth type of supplemental light having a peak wavelength of 385 nm, and the fifth type of supplemental light having a peak wavelength of 395 nm can enhance growth and photosynthesis of ice plant.

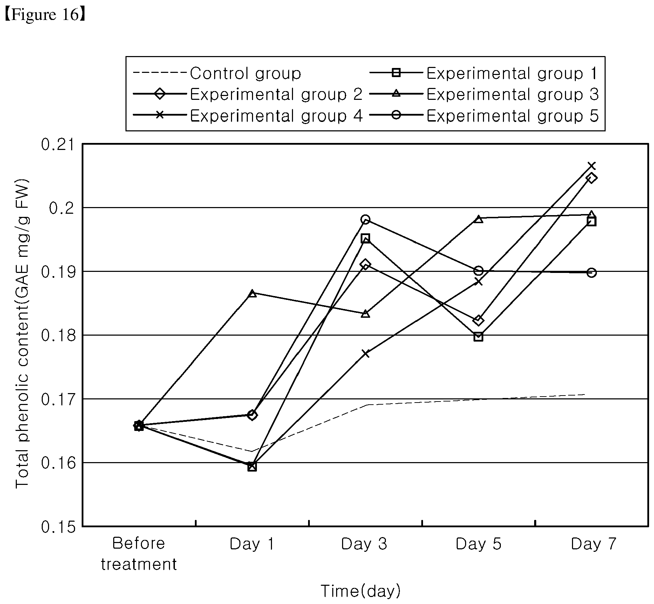

FIG. 16 to FIG. 18 are graphs showing changes in phytochemical content of the plant depending on the light treatment conditions according to the present invention.

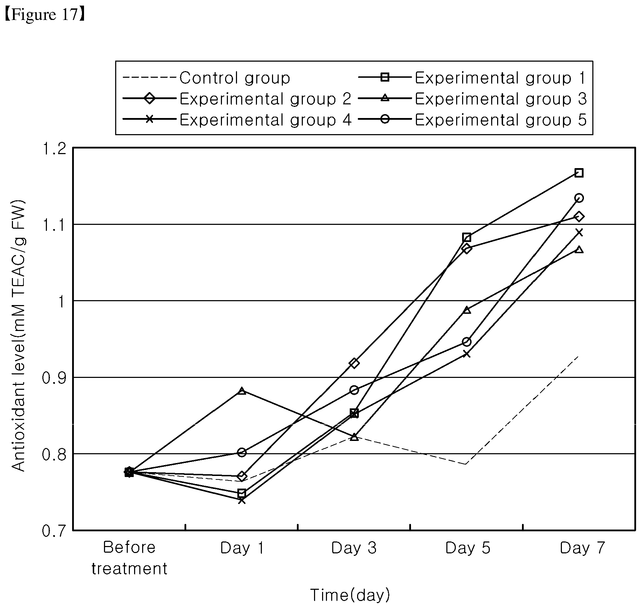

FIG. 16 is a graph showing changes in total phenolic content of the plant depending on the light treatment conditions according to the present invention. FIG. 17 is a graph showing changes in antioxidant level of the plant depending on the light treatment conditions according to the present invention.

Referring to FIG. 16, on days 3, 5, and 7 after the start of supplemental light treatment, the total phenolic contents of Experimental groups 1 to 5 were all higher than that of the control group.

Referring to FIG. 17, on days 5 and 7 after the start of supplemental light treatment, the antioxidant levels of Experimental groups 1 to 5 were all higher than that of the control group.

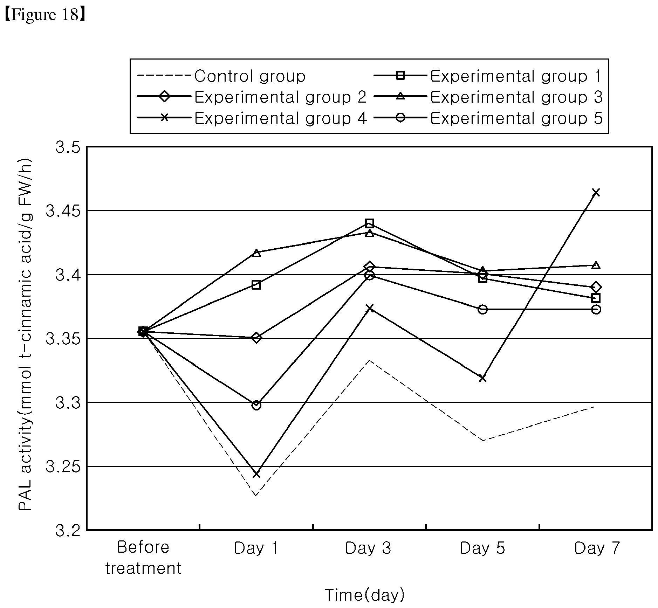

FIG. 18 is a graph showing changes in PAL activity of the plant depending on the light treatment conditions according to the present invention.

Referring to FIG. 18, from the first day of supplemental light treatment, the PAL activities of Experimental groups 1 to 5 were all higher than that of the control group.

In addition, from the fifth day of supplemental light treatment, the PAL activities of Experimental groups 1 to 5 were significantly higher than that of the control group.

That is, it can be seed that, from the fifth day of additional treatment with the supplemental light, the PAL activity of ice plant increases, thereby overcoming the stress caused by the supplemental light. As a result, it can be the that the phytochemical contents (total phenolic content and antioxidant level) of ice plant increase from the fifth day of additional treatment with the supplemental light.

From FIG. 8 to FIG. 18, it can be seen that the supplemental light according to the present invention can enhance growth of ice plant while increasing the phytochemical contents of ice plant from the fifth day of supplemental light treatment.

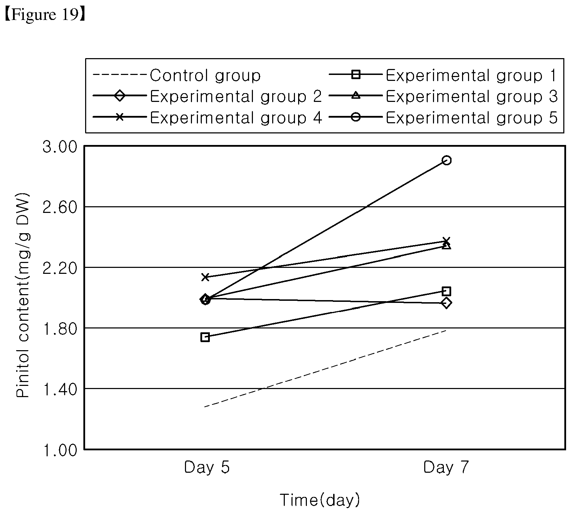

FIG. 19 to FIG. 24 are graphs showing changes in content of a specific substance of the plant depending on the light treatment conditions according to the present invention.

Representative phytochemicals of ice plant include sugar alcohols such as pinitol, myo-inositol, and sucrose. These sugar alcohols are used as a blood sugar regulator and are effective in controlling blood sugar levels in diabetic patients.

An experiment was conducted to determine changes in content of pinitol, myo-inositol, and sucrose, which are representative phytochemicals of ice plant, from the fifth day of supplemental light treatment.

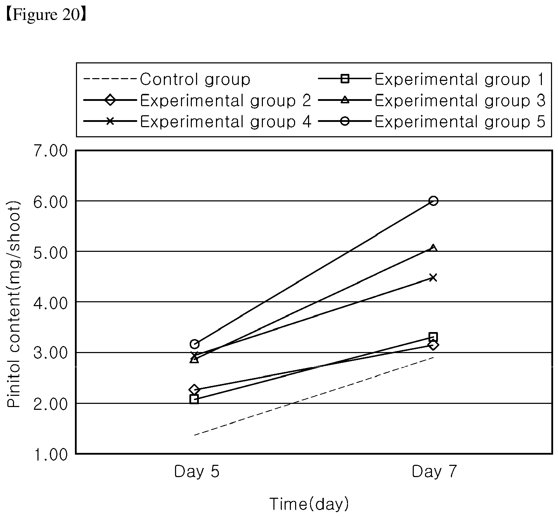

FIG. 19 is a graph showing changes in pinitol content per gram depending on the light treatment conditions according to the present invention, and FIG. 20 is a graph showing changes in pinitol content per plant (aerial part) depending on the light treatment conditions according to the present invention.

Referring to FIG. 19 and FIG. 20, the pinitol contents of the control group and Experimental groups 1 to 5 had a tendency to increase over time.

In addition, the pinitol contents of Experimental groups 1 to 5 treated with the supplemental light were all higher than that of the control group.

In particular, the pinitol content per gram and the pinitol content per plant were significantly higher in Experimental groups 3 to 5 than in the control group.

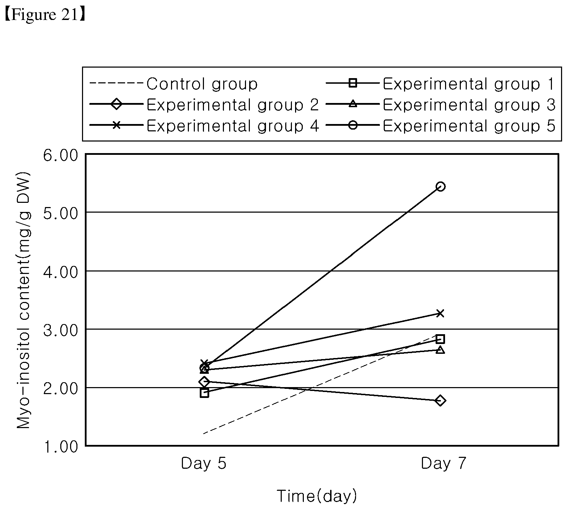

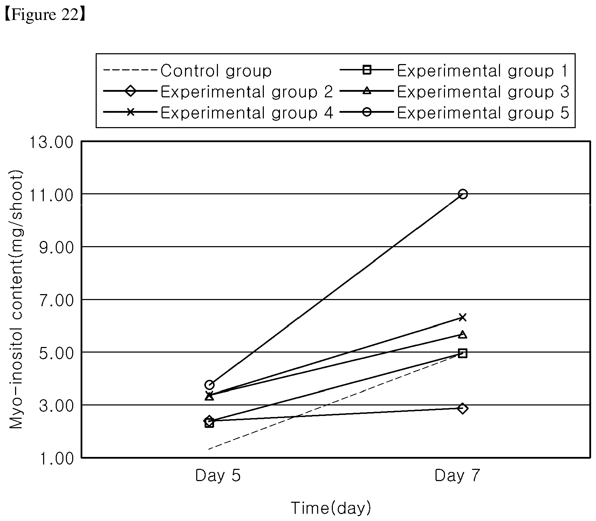

FIG. 21 is a graph showing changes in myo-inositol content per gram depending on the light treatment conditions, and FIG. 22 is a graph showing changes in myo-inositol content per plant (aerial part) depending on the light treatment conditions.

Referring to FIG. 21 to FIG. 22, the myo-inositol content showed a tendency to increase over time in the control group and Experimental groups 1 and 3 to 5.

However, Experimental groups 1 to 3 had a lower rate of increase in myo-inositol content over time than the control group. Eventually, on the seventh day of supplemental light treatment, the myo-inositol contents of Experimental groups 1 to 3 were similar to or lower than that of Control group.

That is, the myo-inositol contents of Experimental groups 4 and 5 were significantly higher than that of the control group.

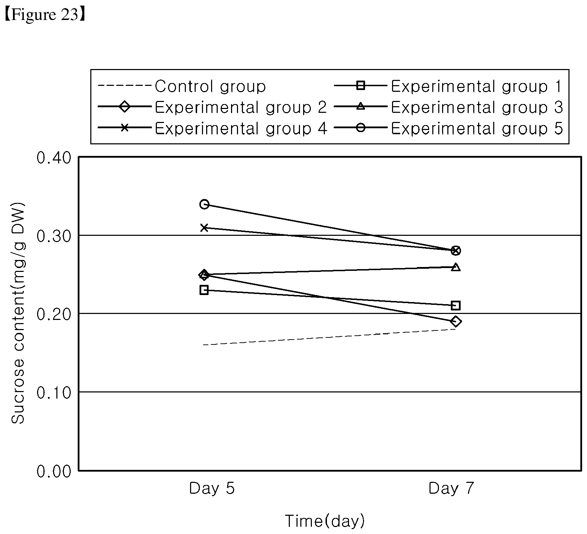

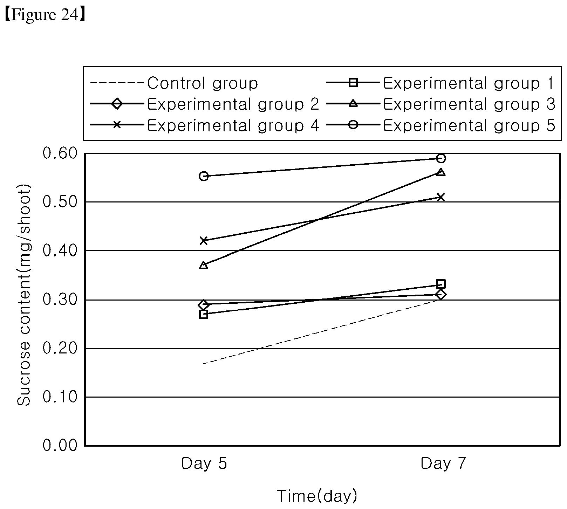

FIG. 23 is a graph showing changes in sucrose content per gram depending on the light treatment conditions, and FIG. 24 is a graph showing changes in sucrose content per plant (aerial part) depending on the light treatment conditions.

Referring to FIG. 23 and FIG. 24, the sucrose contents of Experimental groups 1 to 5 were higher than or similar to that of the control group.

In particular, it can be seen that the sucrose content per gram and the sucrose content per plant were significantly higher in Experimental groups 3 to 5 than in the control group.

In addition, comparison of FIG. 23 with FIG. 24 shows that the sucrose contents per gram of Experimental groups 3 to 5 decreased over time, whereas the sucrose contents per plant of Experimental groups 3 to 5 showed a tendency to increase over time.

From this, it can be seen that treatment with the third to fifth types of supplemental light can enhance plant growth, thereby increasing the sucrose content per plant.

Referring to FIG. 19 to FIG. 24, the contents of pinitol, myo-inositol, and sucrose, which are characteristic substances of ice plant, were all significantly higher in Experimental groups 4 and 5 than in the control group.

From the experimental results shown in FIG. 8 to FIG. 24, it can be seen that supplemental light having a peak wavelength of 385 nm and supplemental light having a peak wavelength of 385 nm are effective in enhancing both growth of ice plant and the content of specific phytochemicals therein, as compared to supplemental light with other peak wavelengths.

That is, additional treatment of a plant during growth with blue light having a peak wavelength of 385 nm or more, which is the supplemental light according to the present invention, can enhance photosynthesis of the plant by supplementing light energy requirements not met by the background light emitted from the artificial light source. As a result, growth of the plant can be enhanced.

In addition, additional treatment of a plant during growth with blue light having a peak wavelength of 385 nm or more, which is the supplemental light according to the present invention, can enhance not only growth of the plant but also the content of a specific phytochemical, such as sugar alcohols, in the plant. Accordingly, the light source module according to the present invention enables cultivation of plants having an increased content of sugar alcohols, which are effective in regulating blood sugar levels.

As described above, the supplemental light according to the present invention has a longer wavelength than UVB. Accordingly, the light source module according to the present invention can prevent damage to a plant due to high intensity of UVB.

In addition, since the supplemental light according to the present invention is not UVB, the light source module according to the present invention can prevent risks associated with exposure of a worker growing plants to UVB.

Although some embodiments have been described herein, it should be understood that these embodiments are provided for illustration only and are not to be construed in any way as limiting the invention. Therefore, the scope of the invention should be defined by the appended claims and equivalents thereto.

## Claims

1. A light source module for plant cultivation, comprising:
a substrate;
a main light source electrically connected to the substrate and supplying background light to a plant; and
a supplemental light source electrically connected to the substrate and supplying supplemental light to the plant,
wherein the background light and the supplemental light have different peak wavelengths, and
the supplemental light comprises light having a peak wavelength in the range of the violet spectrum to the blue spectrum to enhance growth of the plant and the content of a specific phytochemical in the plant.

2. The light source module according to claim 1, wherein the main light source supplies the plant with white light as the background light.

3. The light source module according to claim 1, wherein the supplemental light has a peak wavelength in the range of 380 nm to 500 nm.

4. The light source module according to claim 3, wherein the supplemental light has at least one peak wavelength selected from among 385 nm and 395 nm.

5. The light source module according to claim 1, wherein the main light source is turned on or off every 12 hours to allow or interrupt supply of the background light.

6. The light source module according to claim 1, wherein the supplemental light source continuously supplies the supplemental light to the plant before harvesting of the plant.

7. The light source module according to claim 6, wherein the supplemental light source continuously supplies the supplemental light to the plant for 5 to 7 days before harvesting of the plant.

8. The light source module according to claim 1, wherein the supplemental light has an irradiance of 30 W/m².

9. The light source module according to claim 1, wherein the plant is ice plant.

10. The light source module according to claim 9, wherein the specific phytochemical of the plant comprises at least one of pinitol, myo-inositol, and sucrose.

11. A plant cultivation method for enhancing growth of a plant and the content of a specific phytochemical in the plant, comprising:
supplying the plant with background light at time intervals of 12 hours; and
continuously supplying the plant with supplemental light having a different peak wavelength than the background light before harvesting of the plant,
wherein the supplemental light comprises blue light.

12. The plant cultivation method according to claim 11, wherein the background light is white light.

13. The plant cultivation method according to claim 11, wherein the supplemental light has a peak wavelength in the range of 380 nm to 500 nm.

14. The plant cultivation method according to claim 13, wherein the supplemental light has at least one peak wavelength selected from among 385 nm and 395 nm.

15. The plant cultivation method according to claim 11, wherein the supplemental light is continuously supplied to the plant for 5 to 7 days before harvesting of the plant.

16. The plant cultivation method according to claim 11, wherein the supplemental light has an irradiance of 30 W/m².

17. The plant cultivation method according to claim 11, wherein the plant is ice plant.

18. The plant cultivation method according to claim 17, wherein the specific phytochemical of the plant comprises at least one of pinitol, myo-inositol, and sucrose.
